# EUROPEAN PATENT APPLICATION

(11) **EP 1 947 880 A1**
(43) Date of publication of application: **23.07.2008**
(21) Application number: 06810389.4
(22) Date of filing: 21.09.2006
(51) Int. Cl.: H04Q 7/38, H04B 7/26, H04M 1/00, H04M 3/56

(54) **PUSH-TO-TALK TERMINAL, SERVER APPARATUS, AND METHOD FOR NOTIFICATION OF TERMINAL HAVING ACQUIRED SPEECH RIGHT**

(30) Priority: 30.09.2005 JP 2005287391
(71) Applicant: NEC Corporation, Minato-ku Tokyo 108-8001 (JP)
(72) Inventor: TOBA, Hiroyuki, Tokyo 108-8001 (JP)
(74) Representative: Wenzel & Kalkoff
(86) International application number: PCT/JP2006/318729
(87) International publication number: WO 2007/040056

(57) **Abstract**

Provided is a Push-to-Talk (PTT) terminal having a user interface that makes it possible to immediately verify by sound who has acquired the right to speak at the time of PTT communication. The Push-to-Talk terminal has means for previously selecting and setting user-set melody data to be reproduced at the acquisition of right to speak in the PTT function, and means for reproducing the selected and set user-set melody data, and transmitting the selected and set user-set melody data to the other terminals of the group by the PTT function, at acquisition of the right to speak in the PTT function. Following the sounding of a tone confirming acquisition of the right to speak (step S25), the specific melody data that has been selected is output (played) (step S26) and the melody data is transmitted to and output at all other terminals belonging to the group by the PTT function.

## Description

### TECHNICAL FIELD

This invention relates to a Push-to-Talk (PTT) terminal having a PTT capability, a server apparatus and a method of notifying a terminal of the acquired right to speak.

### BACKGROUND ART

Push-to-Talk over Cellular (PoC below) services in which a mobile telephone is equipped with a Push-to-Talk capability ("PTT function" below) for implementing one-to-many voice communication have started to become widespread in recent years. A feature of PoC service is that, unlike a line-switched call service, a call can be placed from one to a number of people. However, in a half-duplex call service such as a transceiver whose provision is under consideration, two or more people cannot converse simultaneously owing to band limitations, etc., but instead someone waits for a conversation to end and converses upon acquiring the right to speak.

Patent Document 1 discloses a broadcast system that uses the PTT technology mentioned above. It is described that in terms of basic operation, a wireless telephone whose PTT button is depressed acquires the right to converse ("right to speak" below) and broadcasts the content of speech, but if there are a plurality of wireless telephones whose PTT buttons are depressed, a (PTT) server conducts arbitration with regard to the right to speak. The arrangement is such that voice data from the wireless telephone that has acquired the right to speak by such arbitration is sent to the other wireless telephones.

Patent Document 2 discloses a method in which who the source of an incoming call-waiting call is can be identified by a call-waiting tone when a communicating subscriber is notified of a new incoming call. The adopted arrangement is such that a call-waiting incoming call tone desired to be sounded at the telephone terminal of the other party is transmitted, stored by the switching network (control station) and caused to be output by the other party's telephone terminal.

[Patent Document 1] Japanese Patent Kokai Publication No. JP-P2002-536928A
[Patent Document 2] Japanese Patent Kokai Publication No. JP-P2002-300284A

### DISCLOSURE OF THE INVENTION

### PROBLEMS TO BE SOLVED BY THE INVENTION

Although it is not illustrated in Patent Document 1, a specific melody pattern is output at a terminal that has acquired the right to speak in order to give notification of the fact that the right to speak has been granted. With this conventional method, a problem is that only a person who has been granted the right to speak knows that he or she has been granted the right to speak.

In a case where a plurality of terminals have issued requests to acquire the right to speak, the above-mentioned melody pattern is not output at a terminal that cannot acquire the right to speak. Consequently, a problem which arises is that the terminal cannot immediately recognize that the right to speak has not been acquired unless reference is made to a terminal screen or the like.

Further, if a function similar to that of Patent Document 2 is implemented by a similar arrangement in a PTT service, a PTT server can be equipped with a function equivalent to that of the switching network (control station) described in the same publication. In this case, a problem is that there is increased load upon a server that performs group management (a group management function), member registration, acquisition of participation/non-participation information such as whether a member is "absent" or "present" (a presence detection capability) and allocation of right to speak (a floor control function).

The present invention has been devised in view of the above-described circumstances and its object is to provide a push-to-talk terminal having a user interface that makes it possible to immediately verify by sound who has acquired the right to speak at the time of PTT communication, a server apparatus for this purpose and a method of notifying a terminal of the acquired right to speak.

### MEANS TO SOLVE THE PROBLEMS

In accordance with a first aspect of the present invention, there is provided a terminal characterized by having: means that previously selects and sets user-set melody data to be reproduced at acquisition of the right to speak in the PTT function; and means that transmits the selected and set user-set melody data to other terminals of the group by the PTT function at acquisition of the right to speak in the PTT function. As a result, reproduction of the transmitted user-set melody data at other terminals belonging to the group is implemented.

In accordance with a second aspect of the present invention, there is provided a server apparatus characterized by having: means that manages information concerning a group of terminals, which are interconnected utilizing a Push-to-Talk function (PTT function), and a terminal belonging to this group; and means for exercising control of distribution of the user-set melody data with respect to a terminal having the function for selecting and transmitting the melody data, in such a manner that a member can be uniquely identified by voice that is output at acquisition of the right to speak within the group.

In accordance with a third aspect of the present invention, there is provided a program, or a storage medium storing the program, executed by a terminal having a Push-to-Talk function (PTT function) whereby the terminal, which has obtained a right to speak, broadcasts voice data via a packet communication network to other terminals of a group to which the first-mentioned terminal belongs, the program causing a computer with which the terminal is equipped to execute the following processing: processing for accepting, from a user, selection and setting of user-set melody data to be reproduced at acquisition of the right to speak in the PTT function; and processing for transmitting the selected and set user-set melody data to the other terminals of the group by the PTT function at acquisition of the right to speak in the PTT function.

In accordance with a fourth aspect of the present invention, there is provided a method of notifying a terminal of the acquired right to speak in a Push-to-Talk group (PTT group) formed by a terminal group having a Push-to-Talk function (PTT function) whereby a terminal, which has obtained a right to speak, broadcasts voice data via a packet communication network to other terminals of a group to which the first-mentioned terminal belongs, characterized by including the steps of: selecting and setting user-set melody data to be reproduced at acquisition of the right to speak in the PTT function at one terminal; a terminal, which has acquired the right to speak after joining the PTT group, reproducing the selected and set user-set melody data; the terminal, which has acquired the right to speak, transmitting, by the PTT function, the user-set melody data to other terminals in the group to which the first-mentioned terminal belongs; and each of the other terminals, which have received the user-set melody data, reproducing the user-set melody data that has been transmitted.

### MERITORIOUS EFFECTS OF THE INVENTION

In accordance with the present invention, it is possible to immediately ascertain a person who has acquired the right to speak when the right to speak has been allocated.

### BRIEF DESCRIPTION OF THE DRAWINGS

Fig. 1 is a block diagram illustrating a mobile telephone terminal according to an exemplary embodiment of the present invention;
Fig. 2 is a functional block diagram illustrating voice path in a mobile telephone terminal according to an exemplary embodiment of the present invention;
Fig. 3 is a flowchart illustrating flow for setting a melody played at acquisition of the right to speak in a mobile telephone terminal according to an exemplary embodiment of the present invention; and
Fig. 4 is a flowchart illustrating operation up to relinquishment the right to speak following a request for the right to speak in a mobile telephone terminal according to an exemplary embodiment of the present invention.

### EXPLANATIONS OF SYMBOLS

- 10: CPU (Central Processing Unit)
- 11: ROM (Read-Only Memory)
- 12: flash memory
- 13: wireless transceiver
- 14: key input unit
- 15: display controller
- 16: display unit
- 17: microphone
- 18: speaker
- 19: receiver
- 20: sound source processor
- 30: bus
- 31: switch
- 32a, 32b: D/A (converter)
- 33: A/D (converter)
- 40: transmit processor
- 100: mobile telephone terminal 100

### PREFERRED MODES FOR CARRYING OUT THE INVENTION

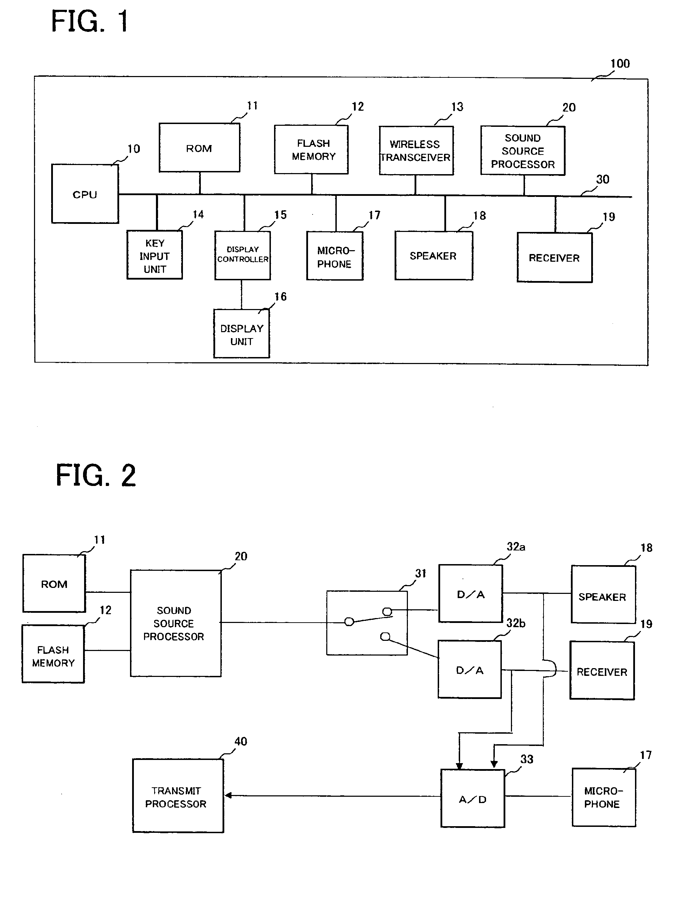

Preferred modes for carrying out the present invention will be described in detail with reference to the drawings. Fig. 1 is a block diagram illustrating a mobile telephone terminal according to an exemplary embodiment of the present invention. With reference to Fig. 1, a mobile telephone terminal 100 in this exemplary embodiment comprises a CPU (Central Processing Unit) 10, a ROM (Read-Only Memory) 11, a flash memory 12, a wireless transceiver 13, a key input unit 14, a display controller 15, a display unit 16 a microphone 17, a speaker 18, a receiver 19 and a sound source processor 20.

The CPU 10 is connected to each of the components in the mobile telephone terminal via a bus 30. Various programs for implementing an SIP (Session Initiation Protocol) for call control and VoIP communication after the session is established, as well as fixed melody data for playing a variety of melody tones, are stored in the ROM 11.

Melody data [MIDI (Musical Instruments Digital Interface) files, etc.], which the user has input by voice or key or has downloaded, is stored in the flash memory 12. The mobile telephone terminal 100 is additionally provided with a RAM (Random-Access Memory) for temporarily storing data when the Internet is accessed and for utilization as a working memory, although the RAM is not shown.

The wireless transceiver (sending/receiving unit) 13, which includes an antenna (not shown), is a means for wirelessly sending and receiving data to and from the nearest base station.

The key input unit 14 is a means that accepts input by various keys (numeric keys, function keys and keys disposed on the outer side when the mobile telephone is folded) inclusive of a PTT key, which is operated for acquisition of the right to speak (or "speak right") in PTT communication.

The display controller 15 is a means that controls the display unit 16 constituted by a monochrome or color liquid crystal panel, etc. The microphone 17 is a means for inputting the voice of the person speaking. The speaker 18 and receiver 19 are means that output the voice of the conversing party in a state in which the ear of the talker is distant and in a state in which it is near, respectively. These are used at the time of voice communication including PTT communication.

The sound source processor 20 is a means thatprocesses melody data that has been stored in the ROM 11 or flash memory 12, causing the melody to be played by the speaker 18 and sending the melody data, etc., to another party's terminal connected in PTT communication via the wireless transceiver 13.

Fig. 2 is a functional block diagram illustrating the voice path in the above-described mobile telephone terminal. With reference to Fig. 2, in terms of the components along the flow of melody data until it is output by the speaker, the melody data, which has been selected by the user of the mobile telephone terminal 100 from the ROM 11 in which fixed melody data has been stored or from the flash memory 12 in which the melody data has been input or downloaded by the user, is subjected to a D/A conversion by the D/A (converter) 32a via the sound source processor 20, after which the melody is output to the speaker 18.

The foregoing is the case for hands-free voice communication. In the case of communication that is not hands-free, it is possible to obtain an output in which the receiver 19 is made the output destination via the D/A (converter) 32b by changing over the switch 31.

The signal obtained by conversion by either the D/A 32a or 32b as described above is also output to the transmit processor 40 that transmits data to the side of the packet communication network. Accordingly, the melody is output by the speaker 18 or receiver 19 so that it is monitored by the terminal itself and is capable of being sent to the terminal of another party.

It should be noted that in the case of voice communication, a voice signal that has been input by the microphone 17 is delivered to the transmit processor 40 via the A/D (converter) 33, whereby a voice is transmitted to the terminal of another party.

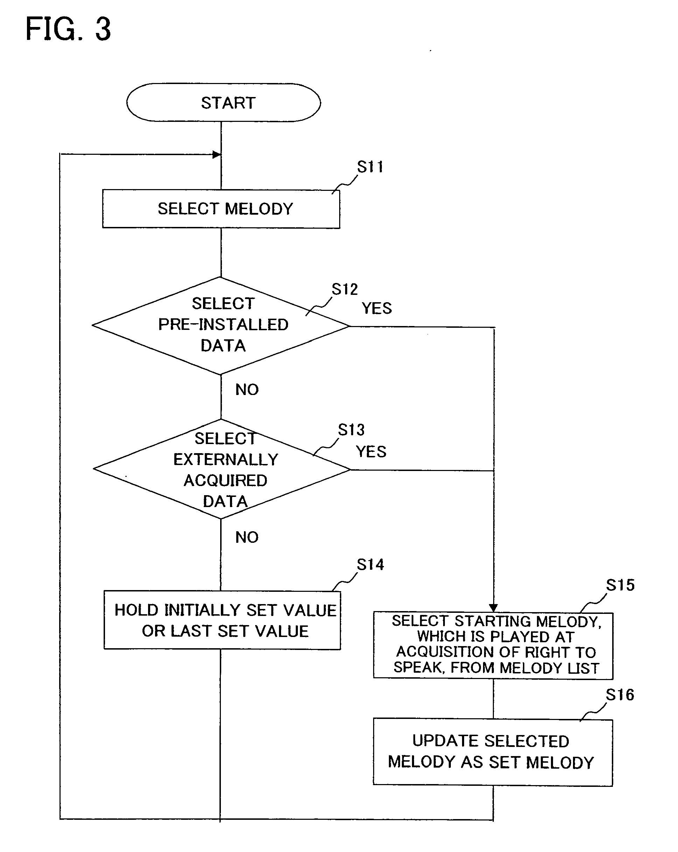

Next, the operation of this exemplary embodiment will be described in detail with reference to the drawings. Fig. 3 is a flowchart illustrating flow for setting a melody for when the right to speak is acquired in a mobile telephone terminal according to the first exemplary embodiment of the present invention.

If the user of the mobile telephone terminal 100 starts up the melody selection function at acquisition of the right to speak in the PTT function (step S11), then the mobile telephone terminal 100 determines whether or not to select fixed melody data (pre-installed data), which has been stored in the ROM 11 beforehand, as an alarm melody played when the right to speak is acquired (step S12).

If a selection not to choose the melody data that has been stored in the ROM 11 is made ("NO" at step S12), then the mobile telephone terminal 100 determines whether to select user-specific melody data, which has been stored in the flash memory 12 upon being acquired by downloading it from a network server or external device such as another mobile telephone terminal, as the alarm melody for when the right to speak is acquired (step S13).

If a selection not to choose the melody data that has been stored in the flash memory 12 is made ("NO" at step S13), then the mobile telephone terminal 100 uses, as is, an initially set value or last set value that gives notification of the terminal number, etc. (step S14).

On the other hand, if the operation performed at steps S12, S13 is to select melody data that has been stored in the ROM 11 or melody data that has been saved in the flash memory 12, the mobile telephone terminal 100 displays a list of selectable melody data and accepts a selection (step S15).

The initially set value or last set value set as the alarm melody played when the right to speak is acquired is changed and updated by the mobile telephone terminal 100 to the melody data accepted at step S15 (step S16).

Thus, any melody data (user-set melody data) is set for each individual mobile telephone terminal as alarm data for when the right to speak is acquired.

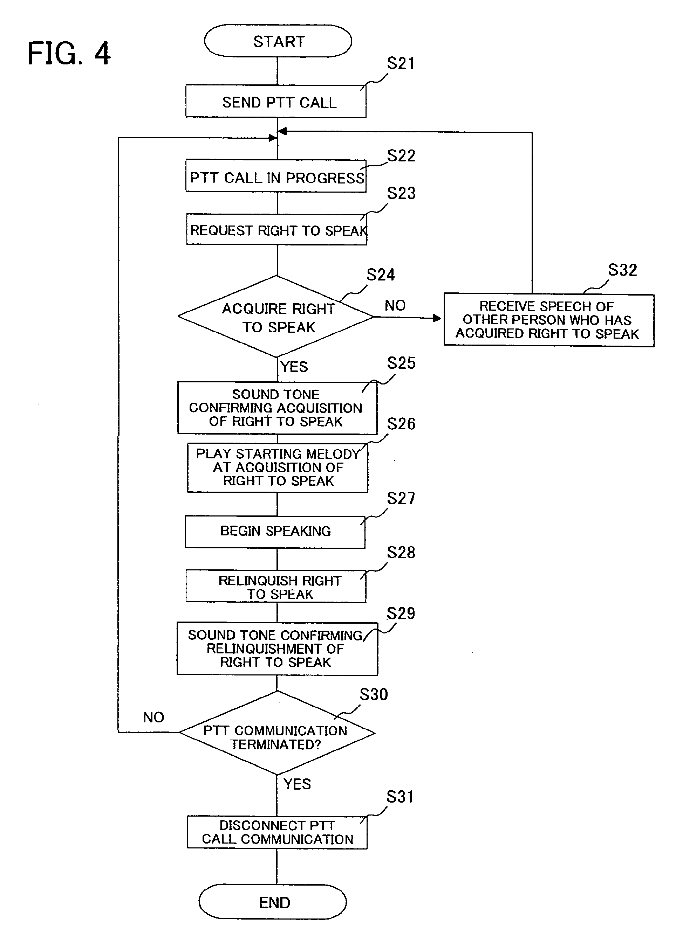

Fig. 4 is a flowchart illustrating operation during PTT communication at a mobile telephone terminal in which an alarm melody for when the right to speak has been acquired has been set in the manner described above. With reference to Fig. 4, if the user performs a prescribed key operation at the key input unit 14, the mobile telephone terminal 100 sends (originates) a PTT call and starts an operation to request a PTT connection (step S21).

Another party's terminal connected to the packet communication network receives the signal and replies to the effect that an answer is possible, as a result of which a transition is made to a state in which PTT communication is possible (step S22).

If the PTT key included in the key input unit 14 is operated under these conditions, the mobile telephone terminal 100 requests the right to speak (step S23).

If there is already another individual who has acquired the right to speak, or if the right to speak cannot be acquired because another speaking individual has acquired the right to speak ("NO" at step S24), the mobile telephone terminal 100 transitions to the PTT communication state in order that the content of voice communication from the other person who has acquired the right to speak may be heard (step S32). If the PTT key is released by the other person who has acquired the right to speak and the utterance by this person is thus terminated, a transition is made to step S22, where acquisition of the right to speak is awaited.

If the right to speak could be acquired ("YES" at step S24), on the other hand, then the mobile telephone terminal 100 outputs (sounds) a tone that confirms acquisition of the right to speak (step S25). This tone indicating acquisition of the right to speak is a fixed melody and is assumed to be tone pattern data used uniformly by all terminals.

After the tone that confirms acquisition of the right to speak is output (sounded), the mobile telephone terminal 100 outputs melody data (user-set melody data) that has been selected and set by the processing, which has been described earlier with reference to Fig. 3, that is for setting the alarm melody played when the right to speak has been acquired (step S26). At this time the mobile telephone terminal 100 outputs (sounds) the user-set melody data from the output device (speaker 18 or receiver 19) of the terminal 100 and, in order to output this melody data to the terminals of other parties (i.e., cause the melody to be played), converts the output data from the sound source processor 20 to ADPCM (Adaptive Differential Pulse Code Modulation) data and transmits this data.

The ADPCM data sent from the mobile telephone terminal 100 that has acquired the right to speak is received at the terminals of other parties and is output at these terminals.

After the melody data (user-set melody data) is reproduced at the mobile telephone terminal 100 at acquisition of the right to speak and the data is output (sounded) at the terminals of the other parties, speaking (voice-interaction) begins and the mobile telephone terminal 100 inputs the voice of the user from the microphone 17 and sends it to the terminals of the other parties (step S27).

If the PTT key is released by the user to terminate speaking, processing for relinquishing the right to speak is executed (step S28) and the mobile telephone terminal 100 outputs a tone indicating confirmation of relinquishment of the right to speak (step S29). Tone pattern data used uniformly by all terminals in a manner similar to the tone confirming acquisition of the right to speak will suffice as the tone indicating relinquishment of the right to speak.

The mobile telephone terminal 100 transitions to step S22 ("NO" at step S30), at which it waits for acquisition of the right to speak, until a prescribed ring-off operation is performed at the key input unit 14.

On the other hand, if the prescribed ring-off operation is performed ("YES" at step S30), the mobile telephone terminal 100 performs an operation to disconnect the PTT call and leaves the group (step S31).

Thus, as described above, when the right to speak during PTT communication is acquired, it is possible to cause user-specific melody data (user-set melody data) to be output to all of the other terminals in the group (to be sounded at these terminals) separately of melody data used uniformly by all of the terminals, and it is possible to determine based upon the user-specific melody data (user-set melody data) that the person who has acquired the right to speak is at least not oneself.

Further, if the corresponding relationship between the user-specific melody data (user-set melody data) and the user thereof is already known to other users (even if it is unknown initially, it will be known from the second origination of a call onward), then it is also possible to determine the person who has acquired the right to speak.

Furthermore, in the foregoing exemplary embodiment, since the arrangement is such that the user-specific melody data (user-set melody data) is output (sounded) also at the terminal that has acquired the right to speak, it is possible to use it as a criterion for timing of voice transmission by the user.

Further, by making it possible to also select melody data acquired externally, as described above, it is possible to use melodies in line with the preferences of a wider range of users.

Although an exemplary embodiment of the present invention has been described above, the technical scope of the present invention is not limited to the foregoing exemplary embodiment. It goes without saying that various modifications and substitutions can be made within a scope that does not depart from the gist of the present invention, which is the transmission of user-set melody data to another terminal in advance of placement of a call in PTT communication.

By way of example, in the foregoing exemplary embodiment, it is described that after the common tone confirming acquisition of the right to speak is output (sounded) (step S25), the user-specific melody data (user-set melody data) is output (sounded) (step S26). However, the mobile telephone terminal 100 can be provided with a means that sets whether or not to output the tone confirming acquisition of the right to speak (common melody data) or with an automatic output inhibiting means that automatically inhibits output when the user-specific melody data (user-set melody data) has been set. For example, even if it is so arranged that in a case where user-specific melody data has been set, only the user-specific melody data (user-set melody data) is sounded without outputting (sounding) the tone confirming acquisition of the right to speak (common melody data), the purpose can be fully attained.

Further, in the exemplary embodiment set forth above, it is described that the user-specific melody data (user-set melody data) is output from the speaker 18 or receiver 19. As a matter of course, however, if an earphone microphone or external hands-free kit, etc., has been connected, the user-specific melody data (user-set melody data) is output from the earphone microphone or external hands-free kit, etc.

Further, it is also preferred that the network be provided with a server for conferring the user-specific melody data (user-set melody data) dynamically terminal by terminal, user by user or member by member of a PTT group. The function for distributing the melody data (user-set melody data) may be implemented as a function of a (PTT) server that allocates the right to speak or by a server that operates in cooperation with a (PTT) server.

### INDUSTRIAL UTILIZABILITY

Further, the foregoing exemplary embodiment has been described citing an example in which the invention is applied to a mobile telephone terminal. However, in view of the principle of the present invention, it is also possible to apply the present invention to a PTT-capable terminal such as a PHS (Personal Handyphone System) terminal or PDA (Personal Digital Assistant) terminal.

## Claims

1. A terminal having a push-to-talk function (PTT function) whereby the terminal, which has obtained a right to speak, broadcasts voice data via a packet communication network to other terminals of a group to which the first-mentioned terminal belongs, **characterized by** having:
means for previously selecting and setting user-set melody data to be reproduced at acquisition of the right to speak in the PTT function: and
means for transmitting the selected and set user-set melody data to the other terminals of the group by the PTT function at acquisition of the right to speak in the PTT function.

2. The terminal according to claim 1, **characterized in that** melody data that is played at notification of an incoming call can be selected and set as the user-set melody data.

3. The terminal according to claim 1 or 2, **characterized in that** melody data that has been received from an external device and stored can be used as the user-set melody data.

4. The terminal according to claim 1 or 2, **characterized in that** melody data that has been received from an external device and stored can be used as the user-set melody data; and
the user-set melody data has distribution thereof controlled by the external device in such a manner that a user can be uniquely identified by voice that is output at acquisition of the right to speak within the group.

5. The terminal according to any one of claims 1 to 4, **characterized**
**in that** in a case where user-set melody data has been selected and set, it is made possible to omit reproduction of common melody data that has been set so as to be output at acquisition of the right to speak separately of the user-set melody data.

6. The terminal according to any one of claims 1 to 4, **characterized in that** in a case where user-set melody data has been selected and set, it is made possible to automatically omit reproduction of common melody data that has been set so as to be output at acquisition of the right to speak separately of the user-set melody data.

7. The terminal according to any one of claims 1 to 6, **characterized in that** the user-set melody data is transmitted to other terminals as data in the ADPCM (Adaptive Differential Pulse Code Modulation) format.

8. A server **characterized by** having:
means for managing information concerning a group of terminals, which are interconnected utilizing a Push-to-Talk function (PTT function), and a terminal belonging to this group; and
means for exercising control of distribution of the user-set melody data with respect to the terminal set forth in any of claims 3 to 7, in such a manner that a member can be uniquely identified by voice that is output at acquisition of the right to speak within the group.

9. A program executed by a terminal having a Push-to-Talk function (PTT function) whereby the terminal, which has obtained a right to speak, broadcasts voice data via a packet communication network to other terminals of a group to which the first-mentioned terminal belongs, the program causing a computer with which the terminal is equipped to execute the following processing:
processing for accepting, from a user, selection and setting of user-set melody data to be reproduced at acquisition of the right to speak in the PTT function; and
processing for transmitting the selected and set user-set melody data to the other terminals of the group by the PTT function at acquisition of the right to speak in the PTT function.

10. A method of notifying a terminal of the acquired right to speak in a Push-to-Talk group (PTT group) formed by a terminal group having a Push-to-Talk function (PTT function) whereby a terminal, which has obtained a right to speak, broadcasts voice data via a packet communication network to other terminals of a group to which the first-mentioned terminal belongs, **characterized by** including steps of:
at one terminal, selecting and setting user-set melody data to be reproduced at acquisition of the right to speak in the PTT function;
a terminal, which has acquired the right to speak after joining the PTT group, reproducing the selected and set user-set melody data;
the terminal, which has acquired the right to speak, transmitting, by the PTT function, the user-set melody data to other terminals in the group to which the first-mentioned terminal belongs; and
each of the other terminals, which have received the user-set melody data, reproducing the user-set melody data that has been transmitted.

11. A method of notifying a terminal of the acquired right to speak in a Push-to-Talk group (PTT group) set forth in claim 10, **characterized by** further including a step of any server distributing user-set melody data to the one terminal in such a manner that a member can be uniquely identified by voice that is output at acquisition of the right to speak within the group;
wherein each terminal selects and sets user-set melody data that has been distributed from the server.

12. A method of notifying a terminal of the acquired right to speak in a Push-to-Talk group (PTT group) set forth in claim 10 or 11, **characterized by** further including a step of each terminal accepting whether or not reproduction of common melody data, which has been set so as to be output at acquisition of the right to speak separately of the user-set melody data, is omitted;
wherein in a case where a selection to omit the common melody data has been made, each terminal omits reproduction of the common melody data at acquisition of the right to speak.

13. A method of notifying a terminal of the acquired right to speak in a Push-to-Talk group (PTT group) set forth in claim 10 or 11, **characterized in that** in a case where user-set melody data has been selected and set, each terminal automatically omits reproduction of common melody data that has been set so as to be output at acquisition of the right to speak separately of the user-set melody data.
